# EUROPÄISCHE PATENTSCHRIFT

(11) **EP 1 911 885 B1**
(45) Veröffentlichungstag und Bekanntmachung des Hinweises auf die Patenterteilung: **25.02.2015**
(21) Anmeldenummer: 07090129.3
(22) Anmeldetag: 05.10.2007
(51) Int. Cl.: E02B 3/12

(54) **Erosionsschutzmatratze**
Erosion protection mattress
Matelas de protection contre l'érosion

(30) Priorität: 06.10.2006 DE 102006047678; 06.10.2006 DE 202006015421 U
(43) Veröffentlichungstag der Anmeldung: 16.04.2008
(73) Patentinhaber: Wilcke, Claudia Katrin, 18059 Rostock (DE)
(72) Erfinder: Wilcke, Claudia Katrin, 18059 Rostock (DE)

(56) Entgegenhaltungen:
- EP-A2- 0 190 039
- US-A- 5 368 410
- US-A- 5 641 244

## Beschreibung

### 1. Themengebiet

Die mit natürlichem vorwiegend geologischem Substrat gefüllte Erosionsschutz- bzw. (Geo-)kunststoffgittermatratze wird im ökologisch orientierten Wasserbau als Erosionsschutz für die Gewässersohle insbesondere unterhalb von Brücken und anderen Wasserbauwerken bzw. im Bereich befestigter Sohlen eingesetzt. Die Erosionsschutzmatratze ist ökologisch durchgängig.
Zudem können technische Bauweisen von Fischaufstiegsanlagen mit den Matratzen nachgerüstet und so der Aufstieg von Evertebraten über diese Anlagen gefördert werden.

### 2. Stand der Technik

### 2.1 Stein- oder Schotterschüttungen, Betonplatten und -gitter

Die Gewässersohle unterhalb von Brücken (Brückenfuß bzw. -fundament) etc. wird nach heutigem Stand der Technik vor Erosion insbesondere in Hinblick auf Hochwasserabflüsse durch massive Stein- oder Schotterschüttungen, Betonplatten oder Betongitter gesichert.*

Steine (Wasserbausteine) bzw. Schotter werden z. T. auch durch Teil- oder Vollverguss mit dichtem oder durchlässigem Vergussstoff verbunden. Darunter folgt ein Filter und anschließend der Boden oder noch eine Dichtungsschicht. Weiterhin werden Sohloberflächen als dichte Deckschichten (Asphaltbeton, Gießasphalt, zementgebundenes Material) oder durchlässige Deckschichten (Betonverbundsteine, Säulenpflaster, Drahtschottermatten) ausgeführt. Obwohl diese Bauweisen für den Wasserstraßenbau, also für größere kanalisierte Fließgewässer bestimmt sind, werden sie auch z. T. für Brückenbefestigungen in natürlichen Gewässern wahrgenommen.**

Weiterhin gibt es Untersuchungen der Universität Stuttgart mit geogitterummantelten Steinmatratzen zur Befestigung von Dammböschungen. Dabei geht es darum, das Versagen der Erosion von Einzelsteinen auszuschließen. "Für die Versuche wurden mit jeweils zwei verschiedenen Geogittertypen "Körbe" in drei Längen (...) mit einer Höhe von 25 cm hergestellt und anschließend ringsum verschlossen. Zusätzlich wurde mit Hilfe von handelsüblichen Kabelbindern in einem Rasterabstand von etwa 0,35 m x 0,35 m die untere Lage des Geogitters mit der oberen Lage punktuell verbunden, um so die Bewegungsmöglichkeit der Steine innerhalb der Matratze weitestgehend zu verhindem..."***
* allgegenwärtige Praxis
* * siehe: Wasserbauliche Mitteilungen der Universität Dresden - Belastung, Stabilisierung und Befestigung von Sohlen und Böschungen wasserbaulicher Anlagen: Vorträge zum Wasserbaukolloquium vom 16.03. bis 17.03.2000 / Dresdner Wasserbauliche Mitteilungen Heft 18, ISBN 3-86005-243-8
* ** www.uni-stuttgart.de/igs/content/publications/75.pdf

### 2.2. Erosionsschutzmatten

Darüber hinaus sind verschiedene Ausführungen von Erosionsschutzmatten bekannt.

[DE 76 10 269 U] - hierbei handelt es sich um eine Erosionsschutzmatte aus einem weitgehend geschlossenen Flächengebilde (relativ eng eingestellte Gewebe, engmaschige Gewirke, Wirrfaservliese, Filze, feinstmaschige Drahtsiebe), welches über synthetische Fäden mit einem gitterartigen Flächengebilde verbunden ist.

[DE 296 20 102 U1] - ist eine Schutzmatte für den Wasserbau, gekennzeichnet durch Ober- und Unterschicht, die aus Textilmaterialbahnen bestehen, welche das dazwischen befindliche Schüttgut, ein Sand/Kies-Gemisch mit einer max. Körnung von 16 mm, halten. Die Schichten werden durch Abstandsbegrenzungselemente, eingewebte Abstandsfäden, auf Abstand gehalten.

[DE 44 31 976 B4] - offenbart eine Erosionsschutz- bzw. Drainagematte, bei der zwei Filterschichten, durch eine Krall- und/oder Distanzschicht auf Abstand gehalten, wirken.

[WO 2005/116345 A1] - bezeichnet eine Erosionsschutzmatte, bei der innerhalb eines dreidimensionalen Filamentgebildes eine Matrix aus überwiegend natürlichen Fasern, verteilt in diesem Gebilde, ist.

[EP 0 071 213 A2] - stellt einen Schichtkörper für Bauzwecke unter Schutz. Die Deckschicht besteht aus aktivvernadeltem Faservlies, die Unterlagsschicht aus dem gleichen Vlies oder aus einer Kunststoff-Folie. Für die dazwischen befindliche Partikelschicht wird vorwiegend feinkörniges Material angegeben.

### 2.3 Matratzenartiger Erosionsschutz

[US 5 641 244 A] - stellt ein Deckwerk mit segmentartiger Unterteilung, bestehend aus einer netzartigen Umhüllung, ggf. einem darunter befindlichen Filter und einer Substratfüllung dar. (Die Filtereinsätze dienen dem Halt feinkörniger Substratfüllungen aus Mischungen von Humus, Sand, Splitt, Kokosfasern oder synthetischen Fasern.)

[US 5 368 410 A] - in diesem Patent werden nach oben offene, befüllbare Gabionen - in der Patentübersetzung als matratzenartige Kästen /matratzenartige Schanzkörbe bezeichnet - mit einer Auskleidung durch geotextiles Material, welches das Erdreich in den Zellen zurückhalten kann, beschrieben.

[EP 0 190 039 A2] - hier wird eine textile Einheit aus einem Ober- und Unterstoff bzw. - gitter beschrieben, bei der Ober- und Untermaterial nach vielfältigen Nähmethoden miteinander verbunden sind. Diese Einheit kann im Inneren befüllt werden. Die Unterteilung in für sich abgeschlossene Segmente ist unvollständig.

### 3. Problem

### (zu 2.1)

Allen Varianten des Standes der Technik zum Schutz der Gewässersohle ist eine Grundlage gemein: Es werden große Steine bzw. Schotter benutzt oder die Sohle wird durch Beton befestigt.

Dabei handelt es sich um Materialien, die für aquatisch lebende Evertebraten (Wirbellose, Wasserinsekten) nicht durchgängig sind. Ihnen fehlen die Nischen, kleine Räume - in welche die Strömung nicht eindringen kann - zur Fortbewegung und Nahrungsaufnahme. Die bei einer Stein-/ Schotterschüttung oder auch bei den sog. Steinmatratzen entstehenden Zwischenräume entsprechen nicht der für die Flussaufwärtswanderung von Evertebraten notwendigen Dimensionierung. Das Wasser durchströmt - kaum abgebremst - diese Hohlräume. Auch die auftretenden starken Wirbelbildungen wirken besiedlungsfeindlich.

Die befestigten Sohlen werden somit zu permanenten Wanderungshindernissen für die Mikro- und Minifauna - die ökologische Durchgängigkeit der Fließgewässer ist beeinträchtigt. Dies ist jedoch nicht allgemein augenscheinlich (für den Laien). Wahrgenommen wird es nur indirekt: aufsteigenden Fischen fehlt die Nahrung. Oberhalb der befestigten Sohlstrecken finden sich oft nur Evertebraten im Gewässer, welche flugfähige Entwicklungsstadien ausbilden und dadurch die Wanderungshindernisse überwinden können. Diese Selektion führt letztlich aus zur Selektion der Ichthyofauna.

### (zu 2.2)

1.) Die Erosionsschutzmatte DE 76 10 269 U, die Schutzmatte für den Wasserbau DE 296 20 102 U1, die Erosionsschutz- bzw. Drainagematte DE 44 31 976 B4 als auch der Schichtkörper für Bauzwecke EP 0 071 213 A2 weisen Schichten auf, die ökologische Sperren darstellen. Durch Vliese, Filze, Textilmaterialbahnen etc. können Evertebraten nicht hindurchgelangen.
2.) Unabhängig der jeweils angeführten Bezeichnung stellen das Gebrauchsmuster DE 76 10 269 U und das Patent WO 2005/116345 A1 keine Matratzen dar. Sie entsprechen nicht dem als Matratze definierten Aufbau, der aus mindestens 3 Schichten besteht, wobei die innere Schicht durch eine Ober- und Unterschicht abgegrenzt wird und das Material der dazwischen befindlichen Schicht in eben dieser Schicht festhält und gegen Herausspülen, -tragen o. ä. Abtransport sichert.
3.) Die Matten DE 76 10 269 U, DE 44 31 976 B4 und WO 2005/116345 A1 sind auf Grund ihres geringen Flächengewichts nicht für den Erosionsschutz im Gewässer, d. h. insbesondere auch auf der Gewässersohle von Fließgewässern, im alleinigen Einsatz geeignet. Sie würden aufschwimmen oder zumindestens unterspült werden. Eine Bedeckung ist deshalb zwingend notwendig.
   Diese Bedeckung ist aber wiederum nicht gegen Erosion gesichert (vgl. 2.)); das in die "Waben" (DE 76 10 269 U) gefüllte Material wird bei entsprechender Fließgeschwindigkeit und resultierender Schleppspannung im Gewässer wieder herausgespült. Deshalb wird i. d. R. auf Steinschüttungen zurückgegriffen, um die i. Allg. als Filter bezeichneten Gebilde festzulegen. Auf die daraus entstehende Problematik der nicht größengerechten Nischenräume für die Bewegung und den Aufenthalt von Evertebraten wurde bereits eingegangen.
4.) Abstandsbegrenzungselemente (DE 296 20 102 U1) - Abstandsfäden - vermögen nicht, Materialverlagerungen innerhalb der Matratze bzw. Matte in fließenden Gewässern auszuschließen. Für das Substrat meiner Matratze und die notwendige Schichtdicke ist diese Lösung abzulehnen, da auf Grund der geringen Haftung der Kiese und Steine einschließlich des biogenen Materials bereits während des Transportes und des Einbaus mit Materialverlagerungen zu rechnen ist, und somit kein flächig-vollständiger Erosionsschutz sichergestellt werden kann.
   Darüber hinaus führt die fehlende Kompartimentierung bzw. Segmentierung dazu, dass bei einer Beschädigung der Oberschicht die Matte leerspült und der Erosionsschutz großflächig verloren geht.
5.) Für WO 2005/116345 A1 muss man feststellen, dass die bezeichnete Matrix unter permanenter Wassereinwirkung sich ablöst bzw. biologisch abbaut. Damit kann kein langfristiger Erosionsschutz gewährleistet werden.
6.) Auch eine Aktivvernadelung wie bei EP 0 071 213 A2, abgesehen von dem ökologisch sperrenden Material, ist für die Verwendung von Kies, Steinen und biogenem Material als Substrat und entsprechender Schichtdicke nicht geeignet. Zu oft würden die Nadeln auf Kies bzw. Steine stoßen, die nicht ausweichen wie bspw. Sand, Lehm etc. Die Nadeln brechen ab oder verstumpfen extrem schnell. Und biogenes Material bleibt an den Nadeln hängen.

### (zu 2.3)

In keinem der unter 2.3 ausgeführten Patente wird eine dreidimensional strukturierte Oberfläche für den jeweiligen matratzenartigen Erosionsschutz beschrieben, die außer dem Halt des Substrates zudem in der Lage ist, aquatischen Evertebraten Halt vor Abdrift zu bieten, indem Wurzelstrukturen nachgeahmt werden, das Eindringen der Wasserinsekten in das Substrat zu ermöglichen bzw. zu fördern sowie durch die Struktur der Oberfläche Mikroverwirbellungen an der Matratzenoberfläche hervorzurufen. Die unter 2.3 erwähnten Erosionsschutzmaßnahmen dienen ausschließlich dem Erosionsschutz, eine ökologische Funktion in Form der Förderung bzw. der Wiederherstellung der ökologischen Durchgängigkeit für aquatische Evertebraten ist nicht erkennbar und wird auch nicht beschrieben.

Bei dem unter US 5 641 244 A beschriebenen Deckwerk wird ausschließlich von einer netzartigen Umhüllung gesprochen. Ein Netz stellt ein zweidimensionales Gebilde dar. Auch in EP 0 190 039 A2 gibt es keine Ausführungen, dass die Materialien, aus denen die an das Wasser grenzende Schicht besteht, Dreidimensionalität besitzen. Und die unter US 5 368 410 A beschriebenen Gabionen / Schanzkörbe erfüllen nicht die Anforderungen an den Erosionsschutz, die Matratzen erfüllen, indem sie sich dem Untergrund anpassen können und dem Voranschreiten einer Erosion entgegenwirken. Auch hier wird das integrierte Geomaterial nicht als dreidimensional beschrieben.

### 4. Lösung einschließlich erreichter Vorteile

Die Aufgabe, sohltypisches Material so festzulegen, dass die natürliche Wanderung der Wasserinsekten / Evertebraten sowohl in horizontaler Richtung, d.h. flussaufwärts, als auch in vertikaler Richtung, d.h. in den Gewässerboden hinein, gewährleistet und damit die ökologische Durchgängigkeit im Gewässer erhalten bzw. wiederhergestellt wird, aber der Erosionschutz für die Wasserbauwerke bzw. Brücken auch unter Hochwasserabfluss ebenfalls gesichert ist, wurde mit dieser Erosionsschutzmatratze - einer dreidimensional strukturierten substratgefüllten Kunststoffgittermatratze - gelöst. Darüber hinaus ergeben sich mit der Kompartimentierung bzw. Segmentierung und der vollständigen Sicherung des Substrates gegen Herausspülen Vorteile gegenüber bekannten Erosionsschutzmaßnahmen für die Verlegung / Einbringung ins Gewässer, für Rekonstruktionsmaßnahmen, sofern die Matratzen beschädigt werden, und für die Herstellung.

Diese Art des ökologisch verträglichen Erosionsschutzes wurde für kleine und mittlere Fließgewässer entwickelt. Spezielle Ausführungsvarianten mit Stegen, die der Verankerung im Boden bzw. der Vernetzung der Matratzen untereinander dienen, eigenen sich auch für die Anwendung in größeren Flüssen oder Flüssen mittlerer Größe, bei denen real Hochwasserabflüsse auftreten.

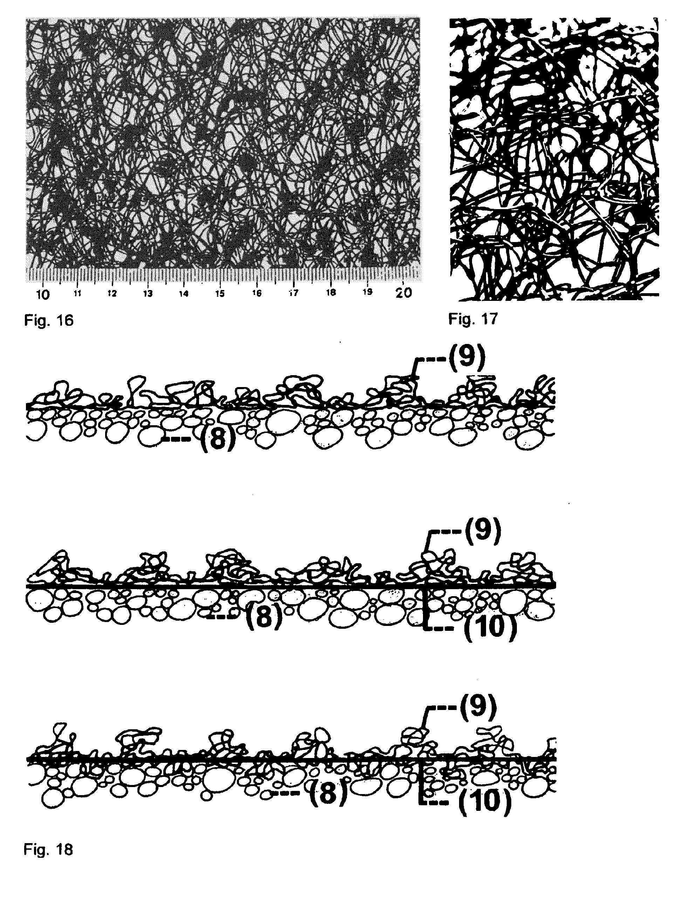

Die dreidimensional strukturierte (Geo-)gittermatte (Wirrlage) (9) mit Höckern (Fig. 18) o. ä., welche die Grenzschicht zum Wasser bildet, ist für die Evertebraten durchlässig. Die Tiere finden an der (Draht-)wirrlage aus Endlosfilamenten Halt - vergleichbar mit einem Wurzelwerk. So können sie erst in die dreidimensionale Schicht und danach in die Füllung (8), welche aus geologischem Substrat (22) - angereichert mit biogenem Material (23) - besteht, eindringen.

Die Füllung der (Geo-)kunststoffgittermatratze setzt sich aus Kies, Steinchen, Steinen, Totholz- und Rindenstücken, Moos, Zapfen und gegebenenfalls auch Anteilen von Tonkügelchen (Geoton) zusammen. Das Substrat entspricht natürlichem Sohlmaterial. Deshalb finden die Wirbellosen / Wasserinsekten auch die passenden Nischen und Strukturen, die sie für ihre Wanderung benötigen.

Da die Gewässersohlen an den Einbaustandorten von Erosionsschutzmatratzen u. a. abhängig vom geologischen Untergrund, von der Flussstruktur / -größe und vom Flussabschnitt sind - im ökologischen Wasserbau charakterisiert als sog. Fließgewässerkontinuum - variieren auch die Mischungen von geogenem und biogenem Substrat sowohl in der prozentualen Zusammensetzung als auch in der Auswahl der jeweiligen Substratgröße oder - bei biogenem Material - in der Auswahl von Totholz, Rindenstücken, Zapfen etc. Es geht darum, die natürlich gegebenen Verhältnisse am Einbaustandort so gut wie möglich nachzuahmen.

Das natürliche Sohlmaterial am Oberlauf eines Gebirgsflusses unterscheidet sich sowohl vom Sohlmaterial im Oberlauf eines Niederungsflusses wie auch vom Mittellauf oder Unterlauf des gleichen Flusses. Da es jedoch unzählig viele Variationen in der Struktur und Zusammensetzung natürlicher (Fließ-)gewässersohlen gibt, gibt es entsprechend auch viele Variationen in der Zusammensetzung des Substrates in den Erosionsschutzmatratzen - das erklärt das variable Mischungsverhältnis des Substrates.

Allerdings ist es nicht möglich, bei natürlich sandigem, schluffigem oder auch tonhaltigem Untergrund mit diesem Material auch den Erosionsschutz herzustellen, d. h. dieses Material in die Erosionsschutzmatratzen zu füllen. Hier wird für die Matratzenfüllung eine Korngröße - z. B. Kies - gewählt, die Erosionsschutz ermöglicht und zugleich Nischen bildet, in denen sich das natürlich vorkommende Sohlmaterial einlagern bzw. absetzen kann.

Als sog. Einzelkorn weist dieses Material jedoch Schleppspannungswerte auf, die deutlich unter denen großer Steine liegen. Kies etc. würde bei einem Hochwasserabfluss mitgerissen werden. Deshalb werden die kleinen Steinchen usw. in einer großen Matratze verpackt.

Das (Geo-)kunststoffgitter ist bzw. die Grenzschichten sind so dimensioniert, dass die Füllung gehalten wird - sowohl in Hinblick auf die Korngröße der Substrate als auch möglicher Zugkräfte. Und als Paket wird nun ein Schleppspannungswert erreicht, der den loser Steine deutlich übersteigt. D. h. das Paket - die substratgefüllte (Geo-)gittermatratze - wird nicht durch ein Hochwasser fortgespült.

Die Grenzschicht bzw. die Wirrlage aus Endlosfilamenten / des Geogitters ist grobdreidimensional, das bedeutet: Die effektive Öffnungsweite dieses dreidimensionalen Gitters / Wirrlage aus Endlosfilamenten bestimmt sich aus der Notwendigkeit, die Füllung für den Erosionsschutz zu halten und das Eindringen der standorttypischen bzw. zu fördernden Evertebraten zu ermöglichen. Die effektive Öffnungsweite ist kleiner zu wählen als die durchschnittliche sog. Einzelkomgröße des Substrates bzw. die durchschnittliche sog. Einzelkomgröße des Substrates muss größer sein als die effektive Öffnungsweite der Wirrlage.

Da diese Erosionsschutzmatratzen für den weltweiten Einsatz bestimmt sind, und bekannt ist, dass die zu fördernden (aquatischen) Evertebraten in den verschiedenen Regionen der Erde sehr unterschiedliche Größen sowie entsprechend der jeweiligen Art bzw. Gattung auch sehr unterschiedliche Beweglichkeit und Verformbarkeit aufweisen, ist es nicht möglich, hier eine absolute Größe für die Weite der Öffnungen in dem Gitter bzw. der Wirrlage sowie eine absolute Dicke der 3-D-Schicht zu geben. Die Dicke der 3-D-Schicht - im ungepressten Zustand - sollte jedoch mindestens der effektiven Öffnungsweite entsprechen. Die effektive Öffnungsweite beschreibt den Abstand von Filamenten zueinander, der geeignet ist, dass ein Evertebrat mit einem bestimmten Durchmesser in der Lage ist, zwischen den Filamenten einen Weg durch die Wirrlage bzw. die grob-dreidimensionale Schicht zu finden. D. h. jedoch nicht, dass alle Abstände zwischen den Filamenten diese Weite aufweisen (müssen).

Für die Verwendung der Erosionsschutzmatratzen in größeren (Fließ-)gewässem oder auf geneigten Flächen (flachen Böschungen) wurden verschiedene Varianten entwickelt, die Stege zur Befestigung der Matratzen im Untergrund mittels Bodenschrauben oder Bau- bzw. Bodenklammern (Doppelnägel) besitzen. Durch die Befestigung wird die Drift bzw. ein Abrutschen verhindert.

Die optimale Unterschicht der (Geo-)kunststoffgittermatratze bildet ebenfalls eine dreidimensionale Wirrlage aus Endlosfilamenten sog. Drähten mit Höckern / Wabenstruktur o. ä. Dadurch können die Evertebraten nicht nur in die natürliche Sohle vordringen; die raue Struktur stellt eine Vernetzung mit dem Untergrund her, und wirkt so ebenfalls erosionsschützend. Zwischen zwei aufeinanderliegenden Matratzen führt die Hoch-Tief-Struktur zum Verkrallen.

Der höchste Grad an Naturnähe wird erreicht, wenn eine geringmächtige lose Schicht Kies auf die obere Matratzenlage aufgebracht wird. Dies setzt jedoch die Toleranz des Abtransportes mit einem Hochwasser voraus und ist wegen der Gefahr des Versatzes nicht an jeder Einbaustelle vertretbar.

### Weitere Ausgestaltung der Erfindung

Die Erosionsschutzmatratze besteht aus mindestens drei Schichten. Die nach oben und unten begrenzenden Schichten sind aus (Geo-)kunststoffgitter / (Draht-)wirrlagen.

Dieses (Geo-)gitter weist optimalerweise eine dreidimensionale Struktur auf. Verwendet wird jeweils eine (Draht-)wirrlage aus Endlosfilamenten. Die nach außen weisende Fläche zeigt eine Hoch-Tief-Struktur (z. B. Höcker-, Wabenstruktur o. ä.). Hoch-Tief-Struktur bedeutet, dass die Schichtdicke der 3-D-Schicht - also der Wirrlage aus Endlosfilamenten - nicht an allen Stellen den gleichen Wert aufweist.

Dieses wird erreicht durch Druck auf die Filamente während des Herstellungsprozesses der Schicht oder ergibt sich durch die Anordnung eines ebenen groben Geogitters, durch welche die 3-D-Schicht hindurchdrückt. Vgl. Fig. 18

Die zur Substratschicht weisende Fläche der Wirrlage bzw. der Kombiwirrlage (nachfolgend beschrieben) sollte relativ eben sein, um eine problemlose Füllung zu gewährleisten.

Um das Gewicht des Substrates während der Befüllung, dem Transport, der Verlegung und einer eventuellen Entfernung (z. B. zu Reparaturzwecken am Wasserbauwerk) zu halten, wird die Wirrlage größerer Matratzen durch ein ebenes grobes (Geo-) kunststoffgitter, welches sich durch eine hohe Zugfestigkeit auszeichnet, unterstützt.

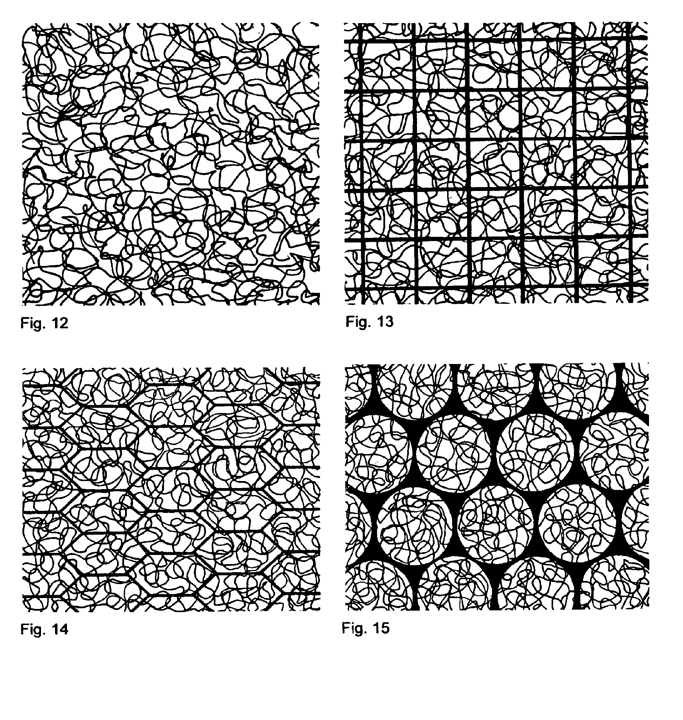

Dieses (Geo-)kunststoffgitter ist als Rechteck-, Sechseck- (bzw. Waben-)gitter oder als großgelochte Folie zu verstehen. (Fig. 13, 14, 15)

Drahtwirrlage und ebenes Gitter werden durch Schweißen, Kleben oder Nähen miteinander verbunden und bilden damit eine Einheit (gemeinsame Schicht = Kombiwirrlage bzw. Tragschicht). Es ist auch möglich, das ebene (Geo-)gitter als Grundlage für das Endlosfilamentgewirr zu nutzen, d. h. die Drähte (Filamente) hängen sich in das Gitter, wenn sie aus dem Extruder kommen. (Fig. 18, unten) Derartige Fertigungstechniken sind in der Kunststoffverarbeitung allgemein bekannt. Für kleine Matratzen, die ohne zusätzlichem ebenen (Geo-)gitter konstruiert sind, ist für die dreidimensionale Schicht eine (Draht-)wirrlage mit glatter Sohle (zur Substratschicht) und verschweißten Drahtpunkten, die die Stabilität erhöhen, zu verwenden. (Fig. 16, 17)

Zwischen den beschriebenen Schichten befindet sich das Substrat geo- und biologischen Ursprungs (Substratschicht / Füllung).

Obere und untere Schicht werden miteinander durch Nähen (Schweißen, Kleben) derart verbunden, dass sich für die Substratschicht eine Unterteilung in Längskompartimente (1) ergibt. Dabei besteht die Möglichkeit, interne Stege (12) anzuordnen bzw. das Material so zu verarbeiten, dass sich flexible interne Stege (18) ergeben. Auf diese Weise erreicht man eine höhere Schichtdicke für die Substratschicht.

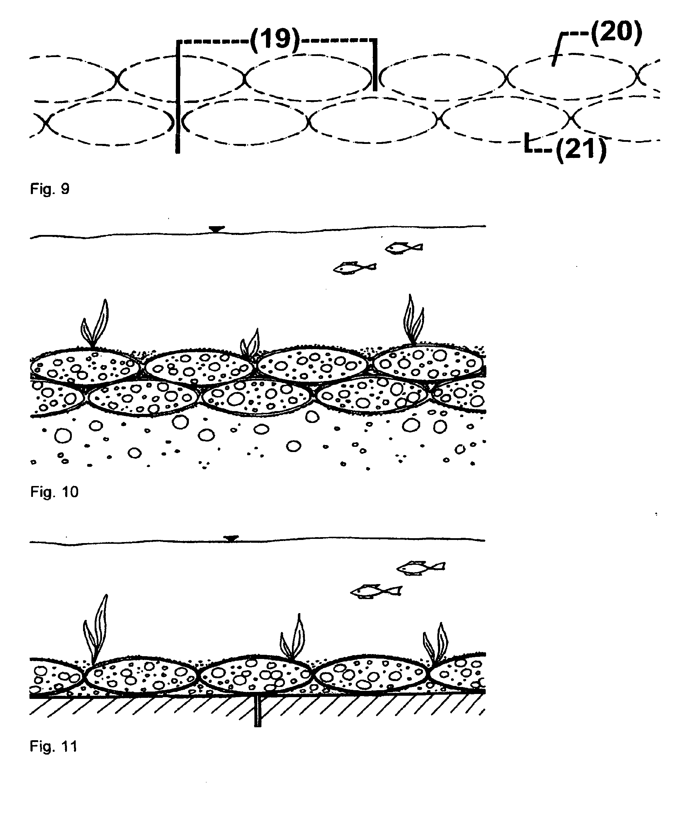

Die innensteglosen Varianten sind dazu bestimmt, in doppelter Lage verwendet zu werden. (Fig. 10) So erreicht man ebenfalls die notwendige Stärke, um optimal vor Erosion zu schützen. Vorteil dieser Variante ist zum Einen die überlappende Verlegung der Matratzen und zum Anderen die leichtere Handhabbarkeit während der Verlegung auf Grund des geringeren Gewichtes.

Wird eine Erosionsschutzmatratze ohne interne Stege nur einlagig verlegt, kann Strömung im Bereich der Kompartimentnähte in den Untergrund gelangen. Die einlagige Anwendung dieser Ausführungsform empfiehlt sich daher nur für die Nachrüstung bestehender befestigter Sohlen, bei denen ausschließlich die ökologische Durchgängigkeit für die aquatischen Evertebraten wieder hergestellt werden soll. (Fig. 11)

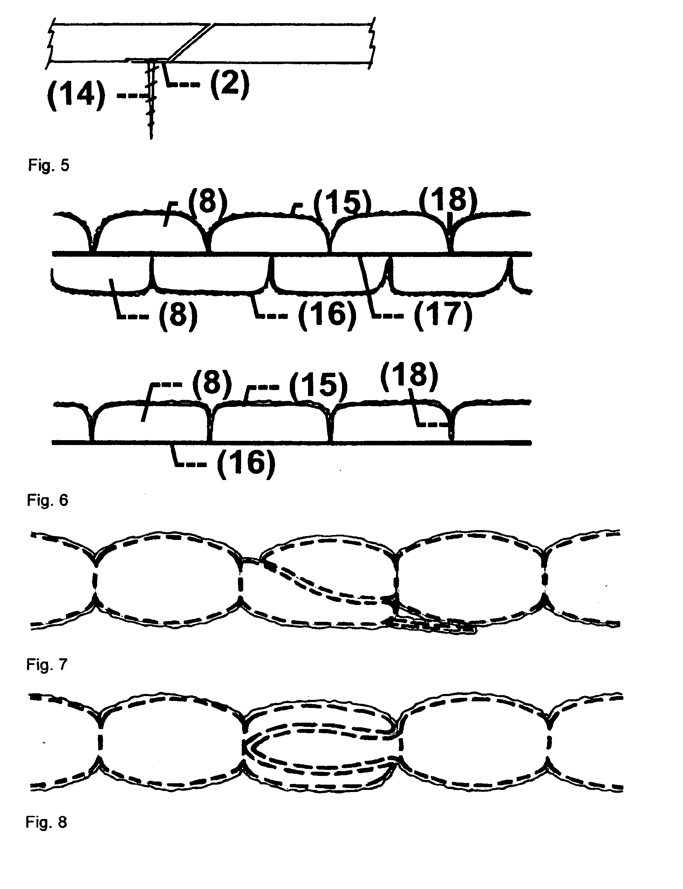

Eine Zeichnung zeigt auch eine Matratzenvariante, bei der prinzipiell zwei Matratzenlagen (Fig. 6 oben) vereinigt sind. D. h. es gibt eine Oberschicht aus der dreidimensionalen Wirrlage, die mit einer groben ebenen (Geo-)kunststoffgitterlage verbunden ist; darauf folgt eine Substratschicht. Anschließend kommt eine (Geo-)kunststoffgitterschicht. Dann kommt wieder eine Substratschicht, und den Abschluss bildet die Unterschicht, die wie die Oberschicht aufgebaut ist. Ober- und Unterschicht sind dabei vom Zuschnitt her viel breiter als die in der Mitte befindliche (Geo-)kunststoffgitterschicht. Mit der Befüllung entstehen so flexible interne Matratzenstege (18), da das Substrat sich aneinander drückt. Die versetzte Anordnung der Nähte für die Längskompartimente führt dazu, dass nirgendwo eine geringere Matratzenstärke auftritt. Gegenüber der Doppellage anderer Matratzen bietet sie den Vorteil, bei Transport und Verlegung einen Arbeitsprozess, nämlich jeweils eine Matratzenverladung und -verlegung einzusparen. Diese Variante eignet sich insbesondere zur Sohlbefestigung in kleinen Gewässern.

Ein weiteres Merkmal der Erosionsschutzmatratzen ist ein ungefüllter Bereich übereinanderliegender (Geo-)kunststoffgitterschichten, der sich an der Stirnseite nach dem Verschließen der gefüllten Kompartimente durch Vernähen (Schweißen, Kleben) ergibt. Dieser Frontsteg (2), der aus der Ober- und Unterschicht entsteht und wenigstens ca. 25 cm bis 30 cm betragen sollte, dient der überlappenden Verlegung der Matratzen einer Schicht. Dabei wird das hintere Ende der in Fließrichtung oberhalb angeordneten Matratze über den Frontsteg der in Fließrichtung folgenden gelegt.

Eine Befestigung der Matratze ist über den Frontsteg des Weiteren möglich, wenn dieser mit Bau- bzw. Bodenklammern (Doppelnägel) (13) oder Schrauben (14) im Boden verankert wird. So wird ein Verrutschen der Matratzen bei Hochwasserabflüssen ausgeschlossen, dies betrifft insbesondere die erste Reihe in Fließrichtung.

Eine weitere Ausführungsvariante ist mit breiten Seitenstegen (3) ausgestattet. Diese unterstützen die Überlappung in Reihe verlegter Matratzen und verhindern Erosionserscheinungen zwischen diesen. (Fig. 7) Auch die untere Lage dieser Matratzen kann mittels Doppelnägeln oder Schrauben gegen seitliche Drift zusätzlich gesichert werden.

Die Matratzen werden in jedem Falle jedoch mit einem Längskompartiment überlappend verlegt. Damit die Überlappung sich nicht prominent gegenüber der Matratzenlage abhebt, werden die äußeren Längskompartimente deshalb nur mit einer Teilfüllung (halber Füllung) versehen. (Fig. 7)

Eine weitere Variante der Überlappung ergibt sich, wenn das randständige Längskompartiment einer Matratze doppellagig ausgeführt wird und in den sich ergebenden Zwischenraum das randständige Längskompartiment der benachbarten Matratze eingelegt wird. Alle daran beteiligten Kompartimente sind jeweils nur mit ca. einem Drittel der sonst üblichen Kompartimentfüllung versehen. Da in der Querschnittsdarstellung die Doppellage wie eine Art Maul aussieht, wird die Seite auch Maulseite genannt. (Maulüberlappung) (Fig. 8)

Um die seitliche Drift der oberflächigen Matratzenlage auszuschließen, sieht eine Ausführungsvariante zu beiden Seitenrändern jeder Matratze einen schmalen Steg (5) vor. Sie werden über Schrauben oder Nieten miteinander verbunden. Diese Vernetzung der Matratzen ist für die obere Matratzenlage und den Einsatz in mittleren bis größeren Fließgewässern mit real auftretenden Hochwasserabflüssen vorgesehen.

Für die flussabwärts liegende letzte Matratzenreihe ist ein Matratzentyp mit hinterem (breiten) Befestigungssteg (4) vorgesehen. Das im Untergrund verankerte Element aus Ober- und Unterschicht verhindert das Kolken unterhalb der Matratzenlage.

Für den Einsatz der Erosionsschutzmatratzen auf geneigten Ebenen / Böschungen gibt es zusätzlich eine Ausführungsvariante mit Flachstegen (6), die zwischen den Längskompartimenten angeordnet sind. Diese Stege sind ebenfalls mit Löchern bzw. Doppellöchern versehen, um die Matratze mittels Bodenklammern bzw. Bodenschrauben zusätzlich zu verankern.

Alle Stege können durch eine zusätzlich eingearbeitete Schicht von (Geo-)textil zwischen der Ober- und Unterschicht verstärkt sein. Die Löcher sollten einen verstärkten Rand besitzen, um ein Ausreißen zu verhindern.

Alle Verbindungen durch Nähte - insbesondere bzw. mindestens jedoch die Außennähte der Längskompartimente - sind als Doppelnähte auszuführen, um durch Versagen einer Naht nicht das Versagen eines Längskompartimentes bzw. der Matratzen zu bewirken.

Die Matratzen werden in standardisierten Größen angeboten. Die Lochabstände sind bei allen Stegen gleich. Dadurch wird es möglich, Matratzen verschiedener Größen aneinander zu koppeln und damit auch Flächen, die verwinkelt sind, abzudecken. Weiterhin können Matratzen längs- und querliegend oder auch von zwei Lagen miteinander verbunden werden.

Typische Matratzengrößen könnten z. B. 2 / 4 / 6 / 8 oder 2,5 / 5,0 / 7,5 Meter in Länge als auch Breite sein. Diese Maße beschreiben die Größe der gefüllten Längskompartimente minus halben Überlappungsbereich (entsprechend der zukünftigen Verlegevorschrift der jeweiligen Ausführungsvarianten). Damit ist die Ermittlung der Anzahl und Größen der Matratzen für das jeweilige Projekt und die Flächenermittlung leicht handhabbar.

Das Material des (ebenen) (Geo-)gitters sowie der Filamente der Wirrlagen ist ein (Geo-)kunststoff oder eine Kombination von (Geo-)kunststoffen, die sich insbesondere durch eine hohe Zugfestigkeit auszeichnen. Es werden Polymere eingesetzt, die gegenüber Wasser (in üblichen Gewässertemperaturen), Witterung und Chemikalien, wie sie üblicherweise im Boden, Oberflächen- oder Grundwasser vorkommen, beständig sind. Für Matratzen, die in geringer Abflusstiefe verlegt werden, ist auf zusätzlich UV-stabilisierte (Geo-)gitter zurückzugreifen. Das Material selbst darf nicht toxisch sein.

Für die ebenen (Geo-)kunststoffgitter kommen sowohl Extrusionsprodukte - einfach oder doppelt verstreckt - wie gewebte ummantelte bzw. beschichtete grobe textile Flächengebilde zum Einsatz.

Folgende Polymere und ihre Abkömmlinge sind u. a. anwendbar: Polyamid (PA), Aramid (aromatische PA), Polyethylen (PE), Polyester / Polyethylenglykolterephthalat (PES / PET), Polypropylen (PP), Polyvinylalkohol (PVA) sowie Carbonfasern. Die spezifischen Eigenschaften der Polymere können dabei durch den Einsatz von Stabilisatoren, Farbpigmenten etc. verbessert sein.

Es handelt sich hierbei um Kunststoffe, die nicht ausschließlich für den Geo- bzw. Erd- oder Wasserbau bestimmt sein müssen, von daher ist die hier verwendete Bezeichnung Geogitter für Kunststoffgitter der genannten Polymere zu verstehen. Die Endlosfilamente, die u. a. auch als Drähte bezeichnet werden, können Durchmesser aufweisen, die die in der Literatur für Drähte von Drahtwirrlagen beschriebenen Stärken übertreffen. Die Endlosfilamente müssen innerhalb der Wirrlage(-n) auch nicht alle den gleichen Durchmesser besitzen. So kann es in einer Wirrlage Filamente von z. B. 0,5 mm und 1,2 mm Stärke geben.

Für den Einsatz in kleinen Gewässern mit geringer Wasserstandshöhe insbesondere in urbanen Gebieten ist die optimale Farbe dieser (Geo-)gittermatratzen grau, hellgrau, steingrau, blaugrau, grüngrau oder beige - einfach um im Wasser nicht aufzufallen. (Ästhetik)

### Weitere Vorteile

Ein weiterer Vorteil, der über die ermöglichte Wanderung der Evertebraten und den Erosionsschutz hinausgeht, ergibt sich durch die relativ ebene Matratzenoberfläche. Im Gegensatz zu Grobschotter- oder Steinschüttungen, welche eine hohe Rauheit (= kleiner k_{St}-Wert) besitzen und Wirbelbildung fördern, was bei Hochwasserabfluss zu strömungsbedingt größerer Abflusshöhe bzw. -tiefe führt, verhält sich die Matratzenlage ähnlich einer ebenen z. B. Betonschicht. Es wird kein zusätzlicher Aufstau erzeugt. Stattdessen wird durch die Längskompartimentierung der Matratzen der schnelle Abfluss gefördert.

Für die Wanderung von Evertebraten wirkt die dreidimensional strukturierte Oberfläche der Matratzen doppelt positiv. Die ermöglicht nicht nur - wie bereits beschrieben - das Eindringen der Wasserinsekten, sie fördert auch die Sedimentation von Sand, der schließlich in die Matratze eingeschwemmt wird und die geologische Füllung sozusagen vervollständigt. Die sich bei Normalabfluss in der Regel bildende Sandschicht auf der Matratzenlage dient Fischen u. a. dazu, Nahrung zu finden oder sich zeitweilig (bzw. bei Gefahr) einzugraben, wie es z. B. Steinbeißer tun. Da die Erosionsschutzmatratzen keine harte Oberfläche oder herausragende Spitzen aufweisen, werden sich auch keine Fische daran verletzen. Bei Schotterschüttungen - insbesondere bei niedrigen Wasserabflusshöhen - schlitzen sich Fische u. a. die Bäuche auf.

Ein sich aus der Art des Produktes ergebender Vorteil liegt in der Größenanpassung. Während z. B. Betongitter oder -platten (seitlich unterhalb von Brücken) genau eingemessen sein müssen, damit keine Lücken im Erosionsschutzsystem entstehen, lassen sich die Matratzen durchaus etwas enger zusammenschieben bzw. haben durch die überlappende Verlegung einen seitlichen Spielraum, so dass sie auch einige Zentimeter mehr Fläche abdecken können als nach bestimmungsgemäßer Berechnung.

Weist das Gewässer eine relativ geringe Abflusshöhe - etwa bis Hüfthöhe - und normale Strömung, d. h. kein Hochwassergeschehen auf, ist eine Verlegung der Matratzen bei normalem Abfluss möglich. Das Gewässer muss nicht umgeleitet, oberhalb aufgestaut oder die Abflussbreite eingeschränkt werden.

Der Einbau von zusätzlichen Erosionsschutzmatten / Filterschichten, wie sie oft unterhalb von Grobschotter- oder Steinschüttungen angewendet werden, erübrigt sich.

Die Erosionsschutzmatratzen sind z. B. für Sanierungszwecke am Brückenfundament zerstörungsfrei entfernbar und können anschließend wieder verlegt werden. Diese Möglichkeit ist bei Deckschichten aus z. B. Giesasphalt oder Drahtschottermatten nicht gegeben.

Für kleinere Projekte bzw. die private Nutzung erweist es sich als vorteilhaft, die Matratzen auch ungefüllt und die Substratfüllung separat im Handel (Baumarkt) anzubieten. Die Befüllung kleiner Matratzen kann auch vor Ort durch Schüttung mittels z. B. einem Kanalrohr vorgenommen werden. Der Verschluss der Längskompartimente erfolgt dann durch Kabelbinder, Klammern o. ä.

Eine Einsatzmöglichkeit im privaten Bereich ergibt sich z. B. in der Befestigung kleiner wasserseitiger Böschungen eines Grundstückes oder eines Bootsliegeplatzes, wo ansonsten aufwendige Rammarbeiten notwendig wären.

Wird ein (Fließ-)gewässer für die Sportschifffahrt genutzt, in dem diese Erosionsschutzmatratzen verwendet werden, ergeben sich sowohl Vorteile wie auch ein Nachteil.
Für Kanus besteht bei niedriger Abflusstiefe (z. B. unter einer Brücke oder Sohlgleite) eine geringere Gefahr der Beschädigung des Bootes beim Aufsetzen auf eine Erosionsschutzmatratze als bei einer Grundberührung auf einer Grobschotter- oder Steinschüttung, wo mit deutlichen Abschürfungen am Bootskörper zu rechnen ist.
Von Nachteil erweist sich für die Erosionsschutzmatratzen die schneidende Wirkung aufsetzender Schwerter oder Pinnen von Segelbooten bei geringer Abflusstiefe.

### Herstellung der Erosionsschutzmatratzen

Was die Herstellung betrifft, werden im Folgenden zwei Verfahren zur Befüllung der Erosionsschutzmatratzen beschrieben.
Die Matratzen selbst entstehen durch das Verbinden - i. Allg. Nähen, wobei Schweißen und Kleben ebenfalls möglich sind - von flächigen Wirrlagen und (Geo-)gittern in zuvor beschriebener Weise. Da Flächengebilde dieser Art bereits als Erosionsschutz-, Drainage- oder Klauenmatten Stand der Technik sind, wird auf die Beschreibung der Herstellung solcher Matten verzichtet. Ebenfalls nicht weiter aufgeführt werden die allgemein bekannten Verfahren zum Verbinden der Matten durch Nähen, Schweißen oder Kleben.

### Verfahren zur Schüttbefüllung der Erosionsschutzmatratzen

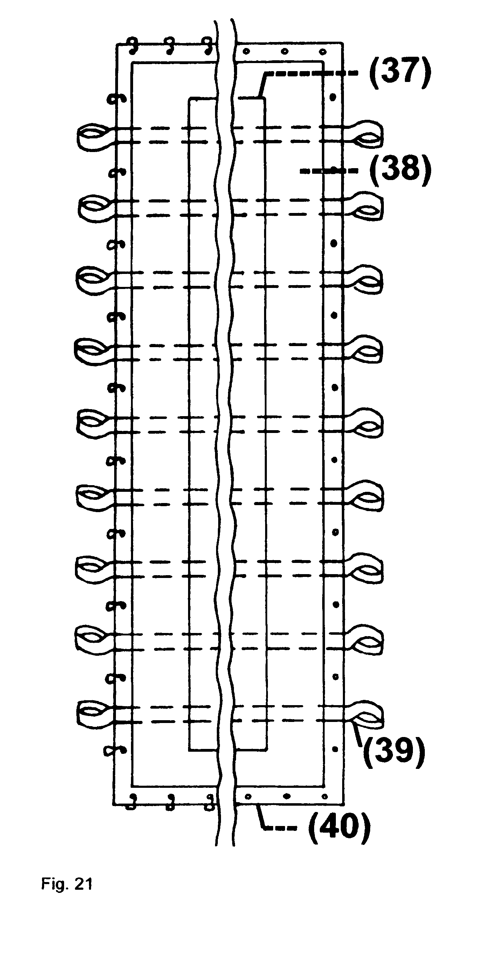

Die nach den Zeichnungen angefertigten Matratzen werden vorerst nur an einem Ende verschlossen (vernäht). Dann werden sie auf eine mit Rollen ausgestattete Lagerfläche (32), auf welche zuvor ein Matratzentransportschutz (38) ausgebreitet wurde, gelegt.
Die Transportschutzhülle ((38) bzw. Fig. 21) besteht aus einem hochreißfestem Gewebe. Ihre Seiten werden z. B. über Klemmen o. ä. mit der Matratze verbunden. Dadurch wird gesichert, dass sich die Transportschutzhülle nicht unter der zu füllenden Matratze bei deren Bewegung auf der Lagerfläche einrollt.

In die Ober- und Unterschicht (Frontsteg) werden nun Krallen (28) eingehängt. Diese ziehen dann zeitgleich alle Längskompartimente einer Matratze über die parallel angeordneten Füllrohre (29). Jedes Kompartiment wird durch ein Rohr befüllt.

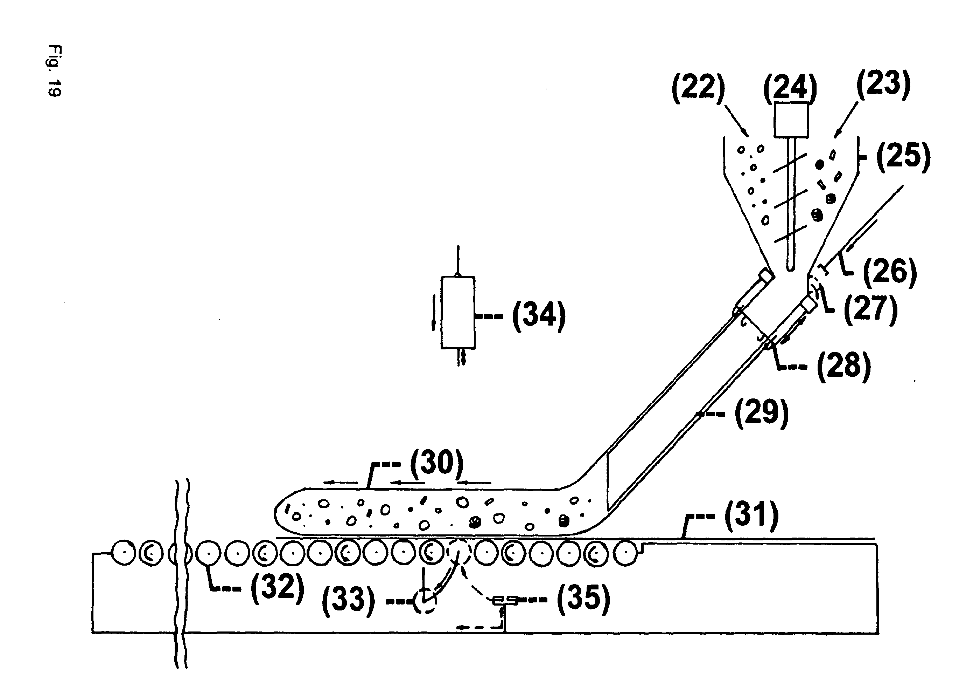

Bei der Schüttbefüllung (Fig. 19) wird das geologische Substrat mit dem biogenen Material über einen Trichter (25), der mit einer Schnecke (24) ausgestattet ist, in die schräg abwärts gerichteten Rohre befördert. Das dadurch in die Kompartimente rutschende Substrat (22, 23) bewirkt ebenfalls das Vorrollen der Matratze auf der Lagerfläche. Dabei wird durch die Krallen, die über Züge / Zugbänder verankert sind, ein zu schneller Vorschub der Matratze verhindert. Die Füllung endet ca. 30 cm vor Matratzenende. Die Matratze liegt nun vollständig auf der Lagerfläche. Die Krallen werden ausgehängt.
Die Matratze bekommt entweder über angetriebene Rollen einen Vorschub oder wird über Krallen gezogen, bis sie die Position erreicht, wo eine Nähmaschine (34) (oder Schweißen bzw. Kleben) das Füllende verschließt.
Die Transportschutzhülle, die auf der Unterseite mit Quergurten (39) ausgestattet ist, wird über Gurtschlaufen (der Transportschutzhülle) an einem Schwenkkran befestigt und transportiert. So kommt die versandtfertige Erosionsschutzmatratze einschließlich Transporthülle auf eine Palette, auf der sich die Matratzen stapeln. Die Transporthülle verhindert hier das Ineinanderkrallen. Der Transportschutz wird erst im Zuge der Verlegung wieder von der Erosionsschutzmatratze getrennt.

### Verfahren zur Horizontalbefüllung der Erosionsschutzmatratzen

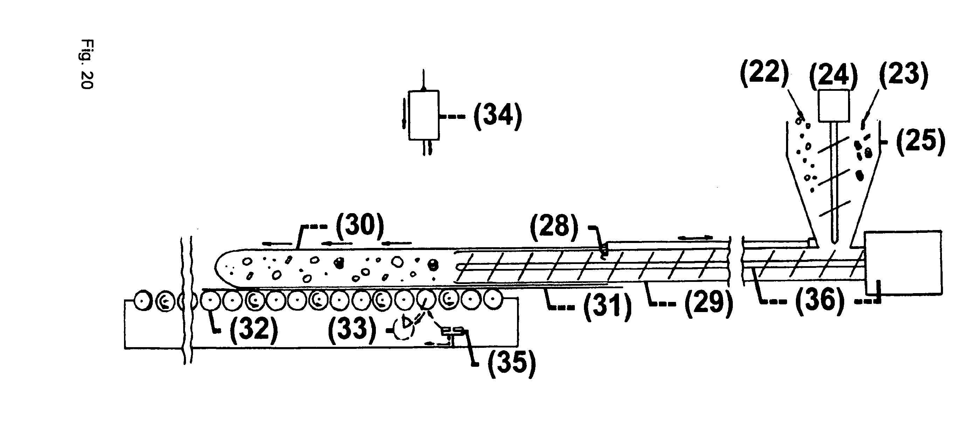

Eine weitere Fülltechnik ist die Horizontalbefüllung. (Fig. 20) Sie unterscheidet sich prinzipiell von der vorhergehend Beschriebenen nur dadurch, dass die Füllrohre (29) eben horizontal angeordnet sind, das Substrat also nicht hineinrollt bzw. geschüttet wird, sondern über eine Schnecke (36), die sich in jedem Rohr befindet, hineintransportiert wird.

Das Mischen von geologischem Substrat und biogenem Material lässt sich optimieren, wenn das Holz, die Rindenstücke etc. zuvor angefeuchtet bzw. durchfeuchtet werden, bevor sie in den Einfülltrichter gelangen. Das gilt für beide Verfahren.

### Zeichnungen

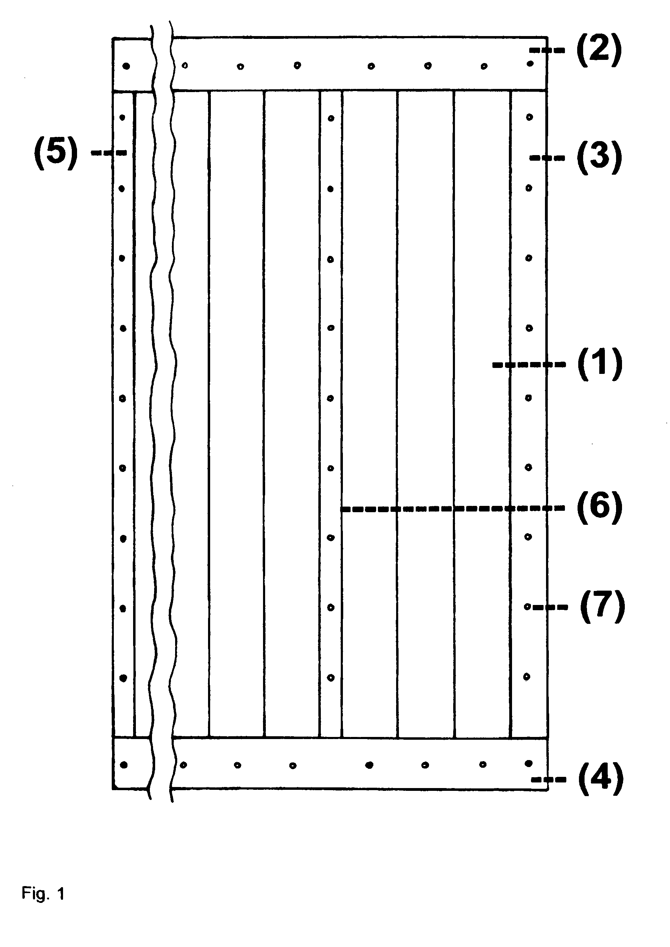

- Figur 1:: Erosionsschutzmatratze mit allen Komplementen (Stegen) - Draufsicht

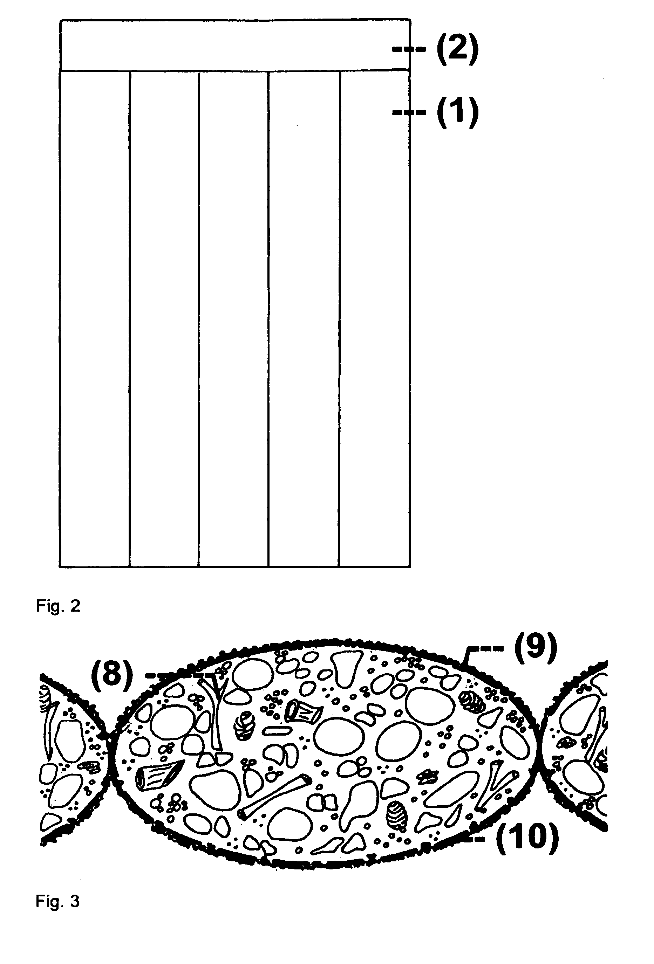

- Figur 2:: Erosionsschutzmatratze - einfache Ausführung - Draufsicht
- Figur 3:: Querschnitt der Erosionsschutzmatratze (ohne interne Stege)

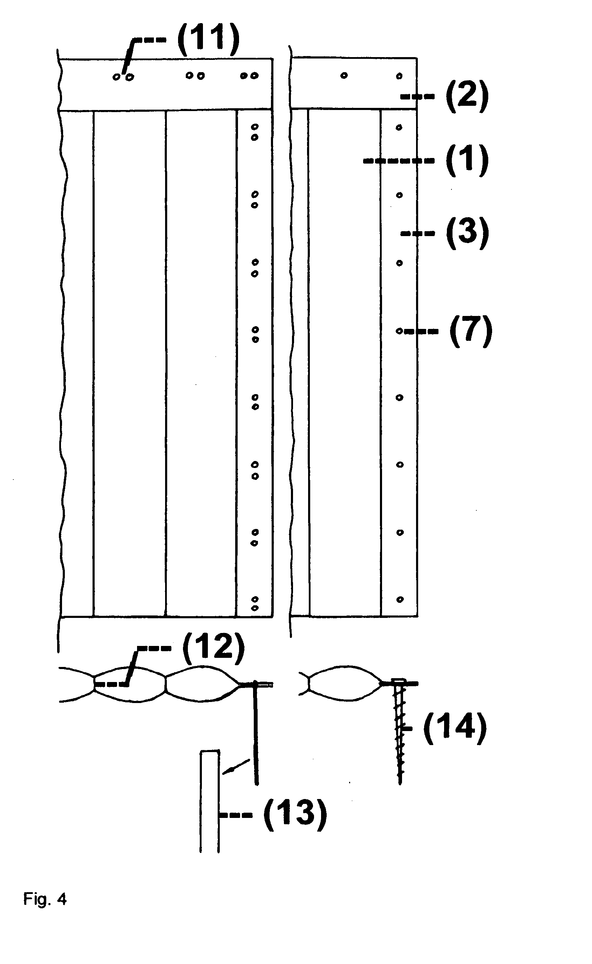

- Figur 4:: Zwei Befestigungssysteme für die Erosionsschutzmatratzen - Draufsicht und Querschnitt
- Figur 5:: Darstellung der Frontüberlappung - Längsschnitt
- Figur 6:: Querschnitte der Erosionsschutzmatratzen mit internen flexiblen Stegen (Ausführung als 5-Schicht- und 3-Schicht-Erosionsschutzmatratze)
- Figur 7:: Überlappung mit breitem Seitensteg bei Einzellage der Erosionsschutzmatratzen - Querschnitt
- Figur 8:: Maulüberlappung der Erosionsschutzmatratzen bei Einzellage - Querschnitt
- Figur 9:: Überlappungsbereich der Erosionsschutzmatratzen bei Doppellage - Querschnitt
- Figur 10:: Querschnitt der Erosionsschutzmatratzen in Doppellage im Gewässer
- Figur 11:: Querschnitt der Erosionsschutzmatratzen in Einzellage im Gewässer
- Figur 12:: (Draht-)wirrlage
- Figur 13:: (Draht-)wirrlage mit Rechteckgitter
- Figur 14:: (Draht-)wirrlage mit Sechseckgitter (Wabengitter)
- Figur 15:: (Draht-)wirrlage mit großgelochter Verstärkungsfolienlage
- Figur 16:: Drahtwirrlage - Fotografische Aufnahme
- Figur 17:: Drahtwirrlage - 3-D-Nahaufnahme
- Figur 18:: 3 Querschnitte durch die Grenzschichten (Ober- und Unterschicht)
oben - dreidimensionale Wirrlage mit Hoch-Tief-Struktur
mittig - dreidimensionale Wirrlage mit Hoch-Tief-Struktur mit darunter befindlicher ebener (Geo-)kunststoffgitterlage
unten - die dreidimensionale Wirrlage mit Hoch-Tief-Struktur ist unterhalb eines ebenen (Geo-)gitters angeordnet und drückt durch dieses durch
- Figur 19:: Schüttbefüllung - Querschnitt
- Figur 20:: Horizontalbefüllung - Querschnitt
- Figur 21:: Transportschutzhülle / -matte

### Bezugszeichenliste

1 - Längskompartiment
2 - Frontsteg
3 - breiter Seitensteg
4 - hinterer Befestigungssteg
5 - schmaler Seitensteg
6 - Flachsteg
7 - Befestigungslöcher, einfach
8 - Substratschicht / Füllung
9 - (Draht-)wirrlage
10 - (Geo-)kunststoffgitter (verstärkend)
11 - Befestigungslöcher, doppelt
12 - interner Steg
13 - Boden- / Bauklammer (Doppelnagel)
14 - Bodenschraube
15 - Oberschicht / obere Grenzschicht (bestehend aus Wirrlage und (Geo-)gitter)
16 - Unterschicht / untere Grenzschicht
17 - Mittelschicht ((Geo-)kunststoffgitter)
18 - flexibler interner Steg
19 - Überlappungsbereich
20 - obere Lage
21 - untere Lage
22 - Füllung: geologisches Substrat
23 - Füllung: biogenes Material
24 - Trichterschnecke mit Antrieb (Motor)
25 - Einfülltrichter
26 - Stopfer (für Verstopfungsbeseitigung / Notfall)
27 - Stopferklappe
28 - Hakenleiste zum Aufziehen der Längskompartimente auf die Füllrohre
29 - Füllrohr
30 - Längskompartiment (gefüllt)
31 - Transportschutzhülle / -matte
32 - Rollenablage und -transport
33 - versenkbare Rolle
34 - Nähmaschine
35 - versenkbare Nähplatte
36 - Füllschnecke mit Antrieb (Motor)
37 - Erosionsschutzmatratze
38 - Transportschutzhülle / -matte
39 - Gurte mit Schlaufen zum Transport (Aufhängung)
40 - umlaufende Randverstärkung mit Loch-Karabiner-Verschluss

## Patentansprüche

1. Erosionsschutzmatratze, unterteilt in Längskompartimente (1), mindestens drei Schichten umfassend, wobei die äußeren Schichten (15, 16) aus Kunststoff bestehen und die dazwischen befindliche Schicht ein Substrat (8) aus einer Mischung von geologischem Substrat und biogenem Material und / oder Tonkügelchen ist, mit einer zur Wasseroberfläche zeigenden Oberschicht (15) mit grober Struktur in Form eines netzartigen Materials,
**dadurch gekennzeichnet, dass**
mindestens die zur Wasseroberfläche zeigende Oberschicht (15) durch eine Wirrlage aus Endlosfilamenten gebildet wird, wobei die Wirrlage unterschiedliche Schichtdicken aufweiset, wobei dickere Schichtabschnitte sich in Form von Schlaufen, Höckern oder Waben darstellen, und die Wirrlage derart gestaltet ist, dass Evertebraten sich zwischen den dickeren Schichtabschnitten und in den dickeren Schichtabschnitten absetzen oder anhaften können.

2. Erosionsschutzmatratze nach Anspruch 1, **dadurch gekennzeichnet, dass** mindestens eine der äußeren Schichten (15, 16) durch ein ebenes Geogitter (10) verstärkt ist und Geogitter (10) und äußere Schicht (15, 16) durch Nähen, Schweißen oder Kleben miteinander verbunden sind.

3. Erosionsschutzmatratze nach einem der vorherigen Ansprüche, **dadurch gekennzeichnet, dass**
die am Rand der Erosionsschutzmatratze befindlichen Längskompartimente (1) eine weniger mächtige Substratfüllung (8), vorzugsweise die Hälfte der normalen Füllmenge, aufweisen.

4. Erosionsschutzmatratze nach einem der vorherigen Ansprüche, **dadurch gekennzeichnet, dass**
die Erosionsschutzmatratze interne Stege (12) aufweist, welche sich in der Substratschicht befinden.

5. Erosionsschutzmatratze nach einem der vorherigen Ansprüche, **dadurch gekennzeichnet, dass**
die Erosionsschutzmatratze einen Frontsteg (2), einen Befestigungssteg an der hinteren Kante (4), Seitenstege (3, 5) und / oder Flachstege (6) aufweist, die die miteinander verbundenen äußeren Schichten (15, 16) umfassen, und dass die Stege einzeln oder unterschiedlich miteinander kombiniert, vorkommen.

6. Erosionsschutzmatratze nach Anspruch 5, **dadurch gekennzeichnet, dass**
der Frontsteg (2), der Befestigungssteg an der hinteren Kante (4), die Seitenstege (3, 5) und / oder Flachstege (6) mit randstabilisierten Löchern (7) oder Doppellöchem (11) für Bodennägel, -schrauben oder -klammern versehen sind.

7. Erosionsschutzmatratze nach einem der Ansprüche 4 bis 6, **dadurch gekennzeichnet, dass**
ein oder mehrere Stege (2, 3, 4, 5, 6, 12) eine verstärkende Kunststoffschicht (10) umfassen.

8. Erosionsschutzmatratze nach einem der vorherigen Ansprüche, **dadurch gekennzeichnet, dass**
die Erosionsschutzmatratze zwei weitere äußere Schichten (15, 16) umfasst, so dass zwei Substratschichten (8) und eine die Substratschichten trennende Geogitterlage (17) vorliegen.

9. Erosionsschutzmatratze nach Anspruch 8, **dadurch gekennzeichnet, dass** die Längskompartimente (1) der Erosionsschutzmatratze auf der einen Seite der Geogitterlage (17) in der Querrichtung gegenüber der Langskompartimente (1) auf der anderen Seite der Geogitterlage (17) versetzt angeordnet sind.

10. Erosionsschutzmatratze nach einem der vorherigen Ansprüche, **dadurch gekennzeichnet, dass**
ein äußeres Längskompartiment (1) der Erosionsschutzmatratze als Nut ausgestaltet ist, wobei dieses in zwei Bereiche unterteilt ist und jeder Bereich mit einem Drittel der Füllung der einzelnen Längskompartimente (1) zwischen Nut und Feder versehen ist, und das gegenüberliegende Längskompartiment (1) als Feder ausgestaltet ist, wobei dieses Längskompartiment (1) mit einem Drittel der Füllung der einzelnen Längskompartimente (1) zwischen Nut und Feder versehen ist.

11. Erosionsschutzmatratze nach einem der vorherigen Ansprüche, **dadurch gekennzeichnet, dass**
die Oberschicht einen Grau-, Blau-, Grün- oder Beigeton aufweist.

## Claims

1. Erosion protection mattress, partitioned in lengthwise compartments (1), at least three layers comprehensively, wherein the outer layers (15, 16) of synthetics consist and the intervening layer a substrate of a mixture of geologic substrate and biogenic material and / or clay globule is, with an to the water surface facing top layer (15) with a coarse structure in the form of a net-like material,
thereby marked, that
at least an to the water surface facing top layer formed by a confused layer of continuous filaments is, and the confused layer different layer-thicknesses shows, and thicker layer sections represented in form of loops, humps and honeycombs, and the confused layer is formed, that invertebrates between the thicker layer sections and in the thicker layer sections can set down or cling.

2. Erosion protection mattress after claim 1,
thereby marked, that
at least one of outer layers (15, 16) by a plane geogrid (10) is strengthened and geogrid (10) and outer layers (15,16) by stitching, welding or adherence with each other are connected.

3. Erosion protection mattress after one of the previous claims,
thereby marked, that
the lengthwise compartments located on the edge of the erosion protection mattress (1) a less mighty substrate filling (8), preferably half of her normal filling amount, show.

4. Erosion protection mattress after one of the previous claims,
thereby marked, that
the erosion protection mattress internal webs (12) shows, which are located in the substrate layer.

5. Erosion protection mattress after one of the previous claims,
thereby marked, that
the erosion protection mattress a front web (2), a connection web at the back edge (4), side webs (3, 5) and /or plane webs (6) shows, them with each other to linked outer layers (15, 16) enclose, and that them webs individually or differently with each other combined, exist.

6. Erosion protection mattress after claim 5,
thereby marked, that
the front web (2), the connection web at the back edge (4), the side webs (3, 5) and / or the plane webs (6) with edge-stabilised holes (7) or double holes (11) for ground nails, -screws or -clamps equipped are.

7. Erosion protection mattress after one of the claims from 4 to 6,
thereby marked, that
one or several webs (2, 3, 4, 5, 6, 12) a strengthening synthetic layer (10) include.

8. Erosion protection mattress after one of the previous claims,
thereby marked, that
the erosion protection mattress two farther outer layers (15, 16) included, in such a way that two substrate layers (8) and one the substrate layers separating geogrid layer (17) are given.

9. Erosion protection mattress after claim 8,
thereby marked, that
the lengthwise compartments (1) of the erosion protection mattress on one side of geogrid layer (17) in the transverse direction to the lengthwise compartments (1) on the other side of the geogrid layer (17) shift are arranged.

10. Erosion protection mattress after on of the previous claims,
thereby marked, that
an outer lengthwise compartment (1) of the erosion protection mattress as a groove is designed, and this into two areas divided is and every area with one third of the filling of the single lengthwise compartments (1) between groove and tongue filled is, and the opposite lengthwise compartment (1) when spring is designed and this lengthwise compartment (1) with one third of the filling of the single lengthwise compartments (1) between groove and tongue filled is.

11. Erosion protection mattress after one of the previous claims, thereby marked, that
the top layer a grey-, blue-, green- or beige-hue shows.

## Revendications

1. Matelas de protection contre l'érosion, divisée en le long compartiments (1), au moins trois comprenant des couches dans lequel les couches extérieures (15, 16) en matière plastique et se composent de la couche intermédiaire comprend un substrat (8) à partir d'un mélange de substrat géologique et matériel biogénique et / ou est billes d'argile, avec un pointage de la couche de surface de l'eau (15) avec une texture grossière en forme d'un matériau en forme de filet,
**caractérisé en ce que**
au moins la surface de parement de la couche d'eau (15) par un aléatoire couche est formée à partir de filaments continus, dans lequel l'orientation aléatoire a différentes épaisseurs de couche, avec des sections de couche sont plus épaisses représenté sous la forme de boucles, des bosses ou des nids d'abeilles, et l'orientation aléatoire tels est conçu que les invertébrés entre les sections plus épaisses de la couche et peut se installer ou se en tenir dans les sections de couche plus épaisse.

2. Matelas de protection contre l'érosion selon la revendication 1,
**caractérisé en ce que**
au moins une des couches extérieures (15, 16) par un plat géogrilles (10) est renforcée et la géogrille (10) et la couche extérieure (15, 16) par couture, soudage ou collage sont interconnectés.

3. Matelas de protection contre l'érosion selon l'une quelconque des revendications précédentes,
**caractérisé en ce que**
situé au bord du matelas de contrôle de l'érosion le long compartiments (1) un remplissage moins puissant de substrat (8), de préférence la moitié de la capacité normale ont.

4. Matelas de protection contre l'érosion selon l'une quelconque des revendications précédentes,
**caractérisé en ce que**
les nervures internes de matelas anti-érosion (12), qui, dans le couche de substrat sont.

5. Matelas de protection contre l'érosion selon l'une quelconque des revendications précédentes,
**caractérisé en ce que**
le contrôle de l'érosion de matelas une barre frontale (2), une barre de montage à la le bord arrière (4), des bandes latérales (3, 5) et / ou des bandes plates (6), le couches extérieures reliées entre elles (15, 16), et que le les terres individuellement ou combinés différemment se produire.

6. Matelas de protection contre l'érosion selon la revendication 5,
**caractérisé en ce que**
la bande avant (2), la bande de fixation au niveau du bord arrière (4), la nappes latérales (3, 5) toiles et / ou plates (6) avec bord stabilisés trous (7) ou double trou (11) pour clous de sol, des vis ou des crampes fournis sont.

7. Matelas de protection contre l'érosion selon l'une des revendications 4 à 6,
**caractérisé en ce que**
une ou plusieurs bandes (2, 3, 4, 5, 6, 12) une couche de renfort en matière plastique (10).

8. Matelas de protection contre l'érosion selon l'une quelconque des revendications précédentes,
**caractérisé en ce que**
le matelas résistant à l'érosion comprend deux couches extérieures (15, 16), de sorte que que les deux couches de substrat (8) et un substrat, les couches sont séparées couche géogrille (17) sont présents.

9. Matelas de protection contre l'érosion selon la revendication 8,
**caractérisé en ce que**
la le long compartiments (1) du matelas anti-érosion, d'une part, la couche de géogrille (17) dans la direction transversale par rapport à la le long compartiments (1) sont décalés sur l'autre côté de la couche de géogrille (17).

10. Matelas de protection contre l'érosion selon l'une quelconque des revendications précédentes,
**caractérisé en ce que**
un le long compartiment extérieure (1) du matelas de protection contre l'érosion comme une rainure est configuré, ce est divisé en deux zones et chaque zone avec un tiers du remplissage de la le long compartiments individuel (1) entre rainure et languette est fourni, et l'inverse le long compartiment (1) est réalisé sous forme de ressort, ledit le long compartiment (1) avec un troisièmement du remplissage de l'individu le long compartiments (1) entre la rainure et ressort est prévu.

11. Matelas de protection contre l'érosion selon l'une quelconque des revendications précédentes,
**caractérisé en ce que**
la couche supérieure est gris, bleu, vert ou beige.
